# EUROPÄISCHE PATENTSCHRIFT

(11) **EP 0 825 284 B1**
(45) Veröffentlichungstag und Bekanntmachung des Hinweises auf die Patenterteilung: **07.05.2003**
(21) Anmeldenummer: 97113886.2
(22) Anmeldetag: 12.08.1997
(51) Int. Cl.: D01H 9/18, B65G 17/18

(54) **Umlaufförderer**
Endless conveyor
Transporteur sans fin

(30) Priorität: 16.08.1996 DE 19632933; 04.04.1997 DE 19713903
(43) Veröffentlichungstag der Anmeldung: 25.02.1998
(73) Patentinhaber: Langen, Manfred, 41179 Mönchengladbach (DE)
(72) Erfinder: Langen, Manfred, 41179 Mönchengladbach (DE)
(74) Vertreter: von Creytz, Dietrich, Dipl.-Phys.

(56) Entgegenhaltungen:
- EP-A- 0 423 519
- EP-A- 0 531 754
- DE-A- 1 510 482
- DE-A- 4 113 296
- DE-A- 4 318 056
- US-A- 3 386 134

## Beschreibung

Die Erfindung betrifft einen Umlaufförderer mit mindestens einem Mitnehmer zum Fördern, Stauen und/oder Positionieren durch Ziehen oder Schieben von Fördergütern, wie Spinnkannen, längs einer Förderbahn, nämlich einer Rollen- und/oder Gleitführung.

In der Textilindustrie werden Faserbänder von und zu Strecken (= Streckmaschinen) sowie Flyern und Spinnmaschinen mit Hilfe sogenannter Spinnkannen, kurz Kannen, transportiert. Nach dem Füllen oder Leerlaufen muß jede Kanne durch eine neue, leere bzw. gefüllte Kanne ersetzt werden. Gegebenenfalls können die Kannen auf Rollen- oder Gleitführungen einzeln oder in Gruppen gezogen oder geschoben werden. Zwischen Strecken, Flyern und Spinnmaschinen müssen häufig große Mengen Leerkannen und Vollkannen transportiert, gestaut und für den weiteren Transport positioniert bereitgestellt werden. Daher wäre es von Vorteil, wenn möglichst viele Kannen gleichzeitig mit möglichst wenig Antrieben transportiert, gestaut und positioniert werden könnten.

In DE 43 18 056 A1 wird eine einzige um eine Spinnmaschine herumführende Förderbahn vorgesehen. Es gibt nur einen einzigen geschlossenen Transportring. Auf der einzigen Förderbahn kann im Bekannten auch nur in einer einzigen Richtung gefördert, gestaut oder positioniert werden. Der dort angegebene Klinken-Mitnehmer kann nämlich nur in einer Richtung fördern.

Auch US 33 86 134 A beschreibt eine Kannenwechsel- und -speichervorrichtung mit jeweils einem einzigen Förderband. Es wird ein U-förmiger Pfad angegeben. Ein Hin- und Hertransport ist also nicht vorgesehen. Ganz Ähnliches gilt für DE 15 10 482 A. Dort wird eine einzige Transportbahn offenbart, beiderseits der Bahn laufen Gliederketten, die durch Schubsprossen miteinander verbunden sind. Die Schubsprossen werden in einem gegenseitigen Abstand von etwas mehr als einem Kannendurchmesser vorgesehen, so daß jeweils zwischen zwei Sprossen eine Kanne stehen kann.

DE 41 13 296 A1 betrifft ein Verfahren zum blockweisen Wechseln von Kannen in einer Spinnmaschine. Hier werden jeder Spinnstelle mehrere Kannen zugeordnet. Die Spinnkannen werden in mehreren Reihen pro Maschinenseite auf Stellplätzen abgestellt, die sich in Maschinenlängsrichtung erstrecken. An den Stellplätzen befinden sich die Kannen auf Transportbändern. Die Transportbänder werden in einer Richtung angetrieben. Zum Zuleiten voller Kannen und zum Abführen leerer Kannen werden im Bekannten unabhängige Förderbahnen vorgesehen. Diese Förderbahnen können nur in bestimmten (einzigen) Richtungen fördern.

EP 05 31 754 A1 beschreibt eine Kannentransportvorrichtung mit einer in einer Führungsrinne laufenden Gliederkette unterhalb der (einzigen) Kannenführungsbahn. In dem Kannendurchmesser entsprechenden Abständen werden an der Gliederkette senkrecht stehende Führungsbolzen als Mitnehmer vorgesehen. Die bekannte Förderbahn bildet die Verbindung zwischen einer faserbahnverarbeitenden Textilmaschine und einer Strecke. Sie soll in der Lage sein, Leerkannen in der einen und Vollkannen in der anderen Richtung auf einer geschlossenen Schleife zu transportieren.

Der Erfindung liegt die Aufgabe zugrunde, den Umlaufförderer eingangs genannter Art so weiterzubilden, daß er in beiden Richtungen der Förderbahn, nämlich der Rollen- und/oder Gleitführungen, die zu transportierenden Fördergüter sowohl fördern als auch stauen kann. Das neue System soll in der Lage sein, unterschiedliche Fördergüter, beispielsweise Leerkannen (= leere Kannen) in der einen Richtung und Vollkannen (= volle Kannen) in der anderen Richtung zu fördern, zu sammeln und - in definierter Position - zu stauen bzw. in bestimmten Bereichen des Systems zu speichern; das System soll zugleich in der Lage sein, die in den Speicherbereichen gestauten Fördergüter einzeln oder in Gruppen je nach Bedarf an den Verbraucherstellen wieder abzuziehen bzw. wegzufördern.

Für den eingangs genannten Umlaufförderer mit Förderbahnen, nämlich Rollen und/oder Gleitführungen, sowie mit mindestens einem Mitnehmer besteht die erfindungsgemäße Lösung darin, daß mindestens zwei separate, nebeneinanderliegende Förderbahnen vorgesehen sind und daß ein und derselbe Mitnehmer für beide Richtungen der Förderbahnen zum Fördern oder Stauen wahlweise für die ein oder andere Förderbahn oder für mindestens zwei nebeneinanderliegende Förderbahnen ausgebildet ist. Grundsätzlich kann erfindungsgemäß in den beiden Richtungen (vorwärts oder rückwärts) gefördert, gestaut und/oder positioniert werden. Einige Verbesserungen und weitere Ausgestaltungen der Erfindung werden in den Unteransprüchen angegeben.

Erfindungsgemäß wird ein Umlaufförderer mit Rollen- oder Gleitführungen sowie mindestens einem Mitnehmer zum Transportieren von Fördergütern, wie Spinnkannen, vorgesehen. Um zu erreichen, daß der Umlaufförderer in beiden Richtungen zugleich fördern, stauen und positionieren kann, werden mindestens zwei nebeneinander liegende Rollen- oder Gleitführungen zum Fördern und Stauen in einer oder beiden Führungs-Längsrichtungen vorgesehen, wobei der Mitnehmer längs der Führungen anzutreiben ist.

Das erfindungsgemäße System besteht aus einem Umlaufförderer, der mindestens einen Mitnehmer besitzt. Die Fördergüter werden über separate Rollen- oder Gleitführungen transportiert bzw. darauf gestaut. Vorzugsweise werden die Rollen- oder Gleitführungen räumlich parallel zueinander bzw. nebeneinander verlaufend angeordnet. Der Mitnehmer dient zum Transport, das heißt zum Ziehen oder Schieben einzelner Güter oder Gruppen von Fördergütern. Der Mitnehmer schiebt bzw. zieht die Fördergüter gegebenenfalls bis in die jeweils vorbestimmte Position. Das System kann mit jedem einzelnen Mitnehmer als Umlaufförderer auch die Fördergüter auf die Gleit- oder Rollenführung ziehen (z.B. von einem Fördermittel) und am Abgabeende des Umlaufförderers die Fördergüter abschieben (z.B. auf das nächste Fördermittel).

Überraschenderweise können zwei oder mehre parallele Förderbahnen bzw. Führungen von einem einzigen versenkbaren Mitnehmer, z.B. Zieh- oder Schiebehaken bzw. -zapfen, zugleich oder nacheinander und zwar in wechselnden Richtungen bedient werden. In diesem Sinne ist ein versenkbarer Mitnehmer besonders variabel, wenn unter anderem folgende Möglichkeiten gegeben sind: Der Mitnehmer greift das jeweilige Gut von hinten oder von unten oder er gleitet unter dem Gut hinweg, um zu einer anderen Arbeitsstelle seiner Bahn zu gelangen.

Allgemein können die Fördergüter auf den Anfang des jeweiligen Systems geschoben oder aufgesetzt werden. Der jeweilige Mitnehmer schiebt oder zieht das Fördergut bis in die vorgesehene Endposition. Ein versenkbarer Mitnehmer kann dann abgesenkt werden und unter dem einen Gut oder einer Mehrzahl von Fördergütern entlang geführt werden, bis er an anderer Stelle des Fördersystems eine neue Aufgabe erhält. Je nach Antriebsweise ist es auch möglich, den Mitnehmer in der einen oder anderen Richtung zu schieben oder zu ziehen. Ein einziger Mitnehmer kann im Rahmen der Erfindung mehrere Fördergüter auf nebeneinander liegenden Rollenoder Gleitführungen transportieren bzw. stauen.

Bei einem erfindungsgemäßen Umlaufförderer kann das jeweils neu aufgesetzte Fördergut bis an das bereits geförderte Fördergut herantransportiert und dort - auf Wunsch - aufgestaut werden. Wird das zuerst in den Stau gebrachte Fördergutstück von seiner Stauposition abgenommen, kann das erfindungsgemäße Fördersystem den oder die anderen aufgestauten Fördergüter um eine Position weiterbringen, bis das nächste Fördergut wieder die Endposition erreicht.

Häufig müssen die Endpositionen sehr genau eingehalten werden, das heißt das Fördergut muß auf einen ganz bestimmten bzw. definierten Ausgangsplatz für den Zugriff eines anderen Transportmittels, eines Verarbeitungsmittels usw. gebracht werden. Zur definierten Positionierung in den vorgegebenen Endpositionen der Stauplätze können gemäß weiterer Erfindung entweder dieselben Mitnehmer, die das Fördergut bereits - gegebenenfalls in den Stau - heranbrachten, oder gesonderte absenkbare Anschläge auf den Rollen- oder Gleitführungen vorgesehen werden.

Im ersten Fall kann der Mitnehmer das Fördergut in Richtung des genannten definierten Ausgangsplatzes - gegebenenfalls an das Ende eines Staus - bringen, so daß die Stauspitze ein wenig über die gewünschte definierte Ausgangsposition hinaus gelangt. Der Mitnehmer kann dann versenkt werden und von der anderen Seite gegen das Fördergut bzw. die Stauspitze gebracht werden. Dort kann er das für den Abtransport usw. bereitstehende Fördergut in der erforderlichen Weise exakt ausrichten bzw. positionieren. Gegebenenfalls kann der Mitnehmer abwechselnd Fördergut an das Stauende heranbringen und jeweils anschließend die Stauspitze definiert ausrichten.

Die im anderen Fall vorgesehenen gesonderten Anschläge können, wenn das zuerst antransportierte Fördergut abgezogen werden soll, kurzfristig, bis zum Anschlag des nächsten Guts einer aufgestauten Reihe abgesenkt werden. Gegebenenfalls kann der Mitnehmer das abzuziehende Fördergut - während der Absenkzeit des Anschlags - abschieben oder abziehen. Ein Anschlag kann - wie gesagt - in der Förderbahn absenkbar und aufrichtbar sein. Er kann auch von der Seite oder von oben in den Weg des Förderguts geschoben werden. Wichtig ist lediglich seine Funktion, die Endposition des jeweiligen Stauplatzes zu definieren.

Ein umlaufend angetriebener Mitnehmer kann im erfindungsgemäßen System die gleiche Funktion für beide Richtungen beim Fördern und Stauen übernehmen. überraschend kann dann für das ganze System, eventuell mit mehreren Förderbahnen, ein einziger Mitnehmer genügen. Ein solcher Mitnehmer kann mechanisch, aber auch elektronisch gesteuert werden. Er kann, wie gesagt, sogar gleichzeitig mehrere Fördergüter auf nebeneinanderliegenden Rollen- oder Gleitführungen fördern oder stauen.

Insbesondere bei Gleitführungen ist das erfindungsgemäße System auch in der Lage, durch Schrägstellungen der Führungen, unterschiedliche Höhen der vor- und nachgeschalteten Maschinen oder Fördermittel problemlos auszugleichen. Die Neigung der Förderbahn darf nur nicht so steil sein, daß die Fördergüter durch die Schwerkraft selbständig in die tiefer gelegene Position gleiten. Das wäre z.B. beim Transport von der tiefer gelegenen Seite zur höher gelegenen Seite nicht akzeptabel, da der Vorteil der Einrichtung darin besteht, daß die aufgelesenen Fördergüter unmittelbar zur Entnahmeseite transportiert werden, dort verbleiben und für die Entnahme direkt bereitstehen.

Anhand der schematischen Zeichnung von Ausführungsbeispielen werden Einzelheiten der Erfindung erläutert. Es zeigen:
- Fig. 1: das Prinzip eines erfindungsgemäßen Förder- und Stausystems eines isotrop in beiden Richtungen in gleicher Weise arbeitenden Umlaufförderers;
- Fig. 2 bis 5: verschiedene Stadien und Ausführungsbeispiele von Umlaufförderern nach Fig. 1 mit versenkbaren Mitnehmer; und
- Fig. 6 und 7: je einen Schnitt quer zur Längsrichtung eines Umlaufförderers.

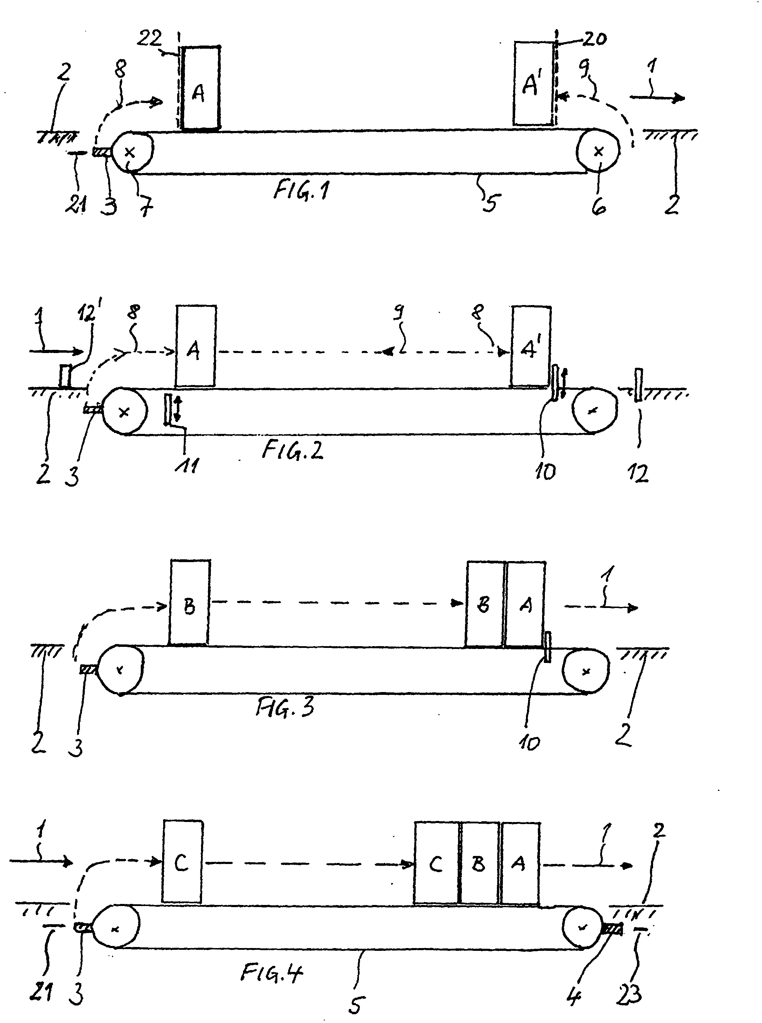

Der Umlaufförderer nach Fig. 1 bis 5 kann zwei oder mehr Förderbahnen besitzen; in Fig. 6 und 7 werden vier Bahnen dargestellt. Fig. 1 zeigt eine Bahn 1 mit Boden 2. Die Bahn 1 kann zugleich Staubahn sein. Sie kann als Rollen- oder Gleitführung ausgebildet sein. Eine Rollenführung ist eine Führung mit Rollen, wobei die Rollen an der Förderbahn aber auch am Fördergut vorgesehen sein können. Ganz ähnliches gilt für eine Gleitführung, auch bei dieser können die Gleitflächen sowohl an der Förderbahn als auch am Fördergut vorgesehen werden. Die Erfindung umfaßt alle diese Fälle und deren Übergänge.

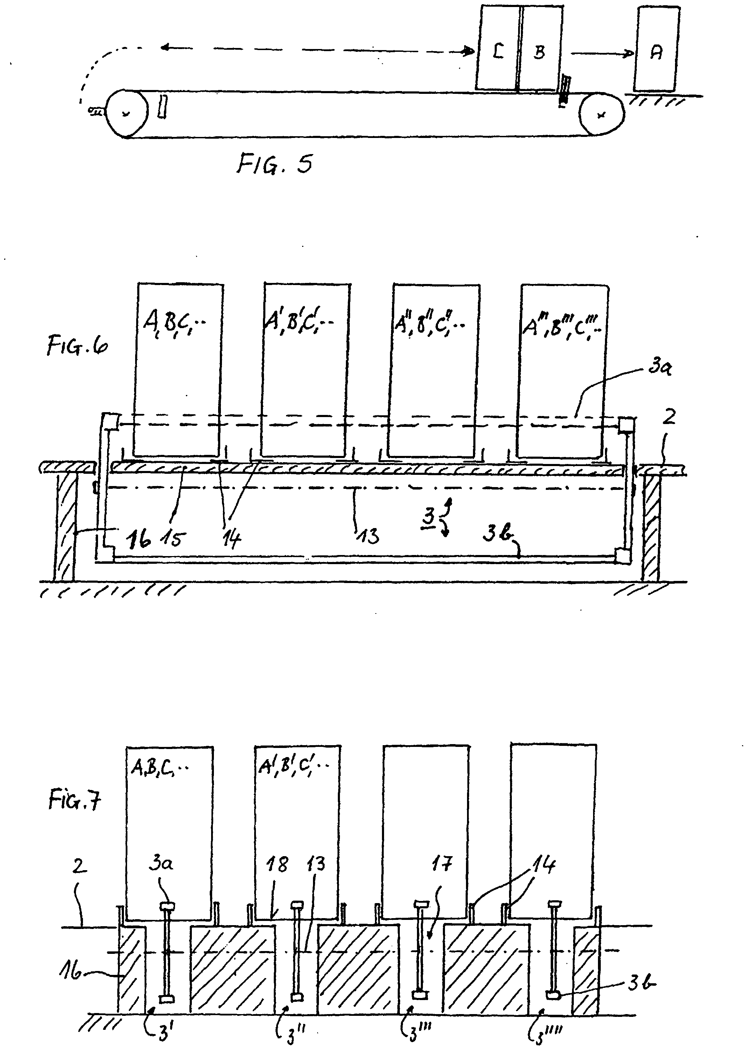

Der Förderbahn 1 nach Fig. 4 können beispielsweise zwei Mitnehmer 3 und 4 zugeordnet werden, die durch irgendein Transportmittel, z.B. ein Band 5, antreibbar sind. Das Band 5 kann über zwei Rollen 6 und 7, von denen wenigstens eine angetrieben ist, in der jeweiligen Förder- oder Staurichtung 8, 9 gezogen werden. Ein Mitnehmer 3, 4 kann aber auch nebeneinander auf verschiedenen Bahnen 1 befindliche Förderplätze antreiben und gegebenenfalls (an der Stauspitze) ausrichten.

Wird das Mitnehmerband 5 in der Richtung 8 angetrieben, so taucht der Mitnehmer 3 aus dem Boden 2 (in Pfeilrichtung 8) auf und gelangt unter oder hinter ein Fördergut A. Dieses Fördergut wird dann auf dem Boden 2, z.B. Rollen- oder Gleitführung, in der Pfeilrichtung 8 beispielsweise bis zu einer Stellung A transportiert. Der Mitnehmer 3 kann dann gegebenenfalls gesenkt oder angehalten bzw. zurückbewegt werden. Er kann insbesondere abgesenkt und zum definierten Positionieren der Kanne A' in Gegenrichtung 9 herangezogen werden.

In Fig. 2 wird zum Zweck des definierten Positionierens der Spitze eines Kannenzuges bzw. einer Kanne A' ein Anschlag 10 vorgesehen, der in der gezeichneten Pfeilrichtung anhebbar bzw. absenkbar sein soll. Vorzugsweise wird der Anschlag 10 an einer Stelle vorgesehen, an der der Mitnehmer 3 die andere Umlenkrolle 6 noch nicht erreicht hat. Wenn dieser Mitnehmer 3 das Fördergut A an den Anschlag 10 gebracht hat, kann er entweder wenden - in diesem Fall soll der zweite Mitnehmer 4 nicht vorhanden sein - oder er kann, wenn die nötige Vorrichtung vorhanden ist, abgesenkt und unter dem Fördergut A sowie vorbei am Anschlag 10 in der Förderrichtung 8 weiterbewegt werden. In letzterem Fall können zwei oder mehr Mitnehmer 4 vorgesehen werden, die jeweils nach Ankunft eines neuen Förderguts B (Fig. 3) dieses vom Bereich der Rolle 7 bis zum Anschlag am vorhandenen Fördergut A transportieren. In Fig. 4 wird dargestellt, wie ein drittes Fördergut C von einem Mitnehmer 3 ergriffen und zu dem Stau am Fördergut B transportiert wird.

Ein Anschlag, wie der Anschlag 10 von Fig. 2 und 3, kann übrigens auch an anderer Stelle der Förderbahn 1 vorgesehen werden. Beispielsweise wird in Fig. 2 ein absenkbarer Anschlag 11 dargestellt. Der Anschlag, z.B. der Anschlag 12 von Fig. 2, auf der Ablieferseite des Fördersystems kann aber auch seitlich neben dem vom Mitnehmer bestrichenen Bereich angeordnet werden. Für den Betrieb kann auch ein Anschlag 12' auf der Förderseite des jeweiligen Systems vorteilhaft sein.

In Fig. 5 wird dargestellt, wie das erfindungsgemäße Förderund Stausystem nicht nur in der ersten Förderrichtung 8, sondern auch zurück in der zweiten Förderrichtung bzw. Gegenrichtung 9 transportieren kann. Im Ausführungsbeispiel wird dargestellt, wie ein Fördergut A in der ursprünglichen Richtung 8, z.B. über den Anschlag 10 von Fig. 2, weiterbewegt, während die anderen Fördergüter C und B zurück, nämlich in die Gegenrichtung 9, gefördert werden können.

Der Schnitt von Fig. 6 zeigt einen um eine Achse 13 (z.B. der Rollen 6, 7) schwenkbaren Mitnehmer 3, der vier Stück Fördergut 1 zugleich schieben oder ziehen kann. Das Fördergut A usw. kann z.B. in Gleitführungen 14, verschiebbar gelagert werden.

Der jeweilige Anschlag 10 von Fig. 2 und 3 dient unter anderem dazu, die Stauspitze in bestimmter Weise auszurichten bzw. zu plazieren, so daß an der Stauspitze befindliches Gut mit Hilfe anderer Transportmittel definiert abgenommen und/oder der Verarbeitung zugeführt werden kann. Das Förder- und Stausystem kommt aber auch ohne den gesonderten Anschlag aus, wenn der jeweilige Mitnehmer 3, der das Gut A, B ... an das Stauende bringt, jeweils den ganzen Stau etwas zu weit - das heißt über eine definierte Abnahme-Position hinaus - bringen kann. Derselbe Mitnehmer kann dann, z.B. versenkt am Stau vorbei, zur Stauspitze geführt werden und diese in der gewünschten Weise ausrichten. Vorteilhaft ist, daß alle die Mitnehmer- und Anschlagarbeiten automatisch, z.B. nach Programm gesteuert, auszuführen sind.

Erfindungsgemäß kann für die gesamte Förderung und Speicherung bzw. Stauung ein einziger Mitnehmer 3 - wie eine einzige Rangierlokomotive auf einem Rangierbahnhof - ausreichen. Nach der Erfindung werden zwei oder mehr separate Förderbahnen nach Fig. 6 der anhand von Fig. 1 bis 5 beschriebenen Art nebeneinander angeordnet, so daß gleichzeitig in beiden Richtungen 8 und 9 gefördert werden kann. Für die Förderung in beiden Richtungen kann - wie gesagt - ein einziger Mitnehmer 3 ausreichen, wenn der Mitnehmer in der einen oder anderen Position bzw. Funktion ausfahrbar bzw. versenkbar ist. Der eine Mitnehmer kann also sowohl nacheinander auf einer Förderbahn in einer Richtung und auf der anderen Förderbahn in der anderen Richtung transportieren als auch auf beiden Förderbahnen zugleich in derselben Richtung Fördergüter schieben oder ziehen bzw. abstellen. Fig. 6 zeigt einen für mehrere nebeneinander liegende Förderbahnen 1 gemeinsamen Mitnehmer 3 welcher - z.B. umgelenkt an den Achsen 13 der Rollen 6, 7 (Fig. 1 bis 5) - in eine Position 3a oberhalb der Gleitführungen 14 der Fördergüter und in eine Position 3b unter den Gleitführungen 14 gebracht werden kann. Die Gleitführungen 14 werden z.B. auf Querabstützungen 15 installiert, die auf Ständern 16 ruhen können. Eine Alternative zu Fig. 6 wird in Fig. 7 dargestellt. In diesem Fall befinden sich die (absenkbaren) Mitnehmer 3 auch im Obertrum des Bandes 5 unterhalb der Güter A, B, C ..., diese werden durch Angriff der Mitnehmer von unten (z.B. unter einen Rand) oder durch Ausstoßen an eine untere Kante des Gutes gezogen oder geschoben. Es werden getrennte Mitnehmer 3', 3'', 3''', 3'''' für jede Förderbahn vorgesehen und vorzugsweise in je einen Schlitz 17 (gerichtet in Längsrichtung der Förderbahn) geführt. Die Schlitze 17 können z.B. in der Querabstützung 15 von Fig. 6 vorgesehen werden, gegebenenfalls werden Ständer 16 an jedem Schlitz 17 benötigt. Die durch einen Schlitz 17 nach oben vorstehenden Mitnehmer 3 können gegen oder unter den Boden 18 der Güter A, B, C, ... greifen.

### Erfindungsgemäße Ausführungsbeispiele

### Beispiel 1:

Umlaufförderer mit durchgehendem Mitnehmer 3 (nach Fig. 6) für mehrere Gleitführungen 14, der mehrere Kannen A, A', A'', A''' usw. gleichzeitig transportiert, staut, positioniert:

Der Mitnehmer ist oberhalb (Stellung 3a) der Gleitführungen 14, wenn er die Kannen manipuliert, und läuft unterhalb (in Stellung 3b) der Gleitführungen 14, wenn er an das andere Ende der Kanne bzw. eines Kannenzuges A, B, C ... kommen will, z.B. nach dem Fördern und Stauen zum Positionieren.

In der Stellung 3a kann der Mitnehmer 3 Kannen auf eine Förderbahn aufschieben oder von einer Förderbahn abnehmen. In der Stellung 3b kann der Mitnehmer nach dem Fördern oder Stauen einer Kanne bzw. eines Kannenzugs das andere Ende erreichen, um dieses Ende definiert zu positionieren.

Wenn der Mitnehmer 3, 4 durchgehend oberhalb der Führungen 14 die Kannen manipuliert, sollen die Drehachsen 13 unterhalb der Querabstützung 15 und die Ständer 16 außerhalb des Mitnehmerbandes 5 bzw. des Mitnehmers 3, 4 liegen.

### Beispiel 1A:

Das System umfaßt einen Mitnehmer 3, aber keine Anschläge 10 bis 12:

Zum definierten Einstellen der Kannenspitze oder dergleichen in einer O-Position bzw. Ausrichtposition 20 muß der Mitnehmer 3 (nach dem Fördern eines Guts A in der Förderrichtung 8) in Gegenrichtung 9 bis zu der 0-Position bzw. Ausrichtposition 20 zurückfahren, die dort stehende Kanne A positionieren und anschließend wieder in der Förderrichtung 8 in seine Grundposition 21 oder in seine Förderposition 22 (Fig. 1) für weitere Förderaufgaben gebracht werden. Bei den nachfolgenden Gütern B, C, ... gilt das Gleiche, das heißt für die Positionierung der Kannenspitze wird relativ viel Zeit gebraucht. Bei diesem sogenannten Reversierbetrieb ist 21 die Grundposition des Mitnehmers 3; dieser muß, um seine Ausrichtposition 20 zu erreichen, den relativ langen Weg unterhalb der jeweiligen Führung 2 bzw. 14 zurücklegen.

### Beispiel 1B

Das System umfaßt einen Mitnehmer 3 und zusätzlich Anschläge 10, 11, 12 und 12':

Die Anschläge vermindern den für das Positionieren zusätzlich gebrauchten Zeitaufwand auf fast Null, sie erfordern aber einen hohen mechanischen und steuerungstechnischen Aufwand. Dieser Aufwand ist bei der Lösung nach Beispiel 1A (ohne Anschläge) relativ gering.

### Beispiel 1C

Das System umfaßt zwei Mitnehmer 3 und 4, aber keine Anschläge:

In diesem Fall übernimmt der Mitnehmer 4 die Positionierung und zwar aus seiner Grundposition 23 (Fig. 4) heraus. Diese Grundposition erreicht er zwangsläufig, wenn Mitnehmer 3 nach jeder Bewegung wieder zurück in die Grundposition 21 fahren soll. Die Grundpositionen 21, 23 von Mitnehmer 3 und Mitnehmer 4 befinden sich genau gegenüber und sind mit dem Mitnehmerband 5 verbunden. - Auch bei dieser Lösung können zwar die Anschläge 10, 11, 12, 12' eingesetzt werden. Der Aufwand ist gegebenenfalls hoch im Vergleich zu dem relativ geringen Zeitverlust beim Positionieren mit Hilfe (zweiten) Mitnehmers 4.

### Beispiel 2A

In der Alternative nach Fig. 7 kann das Fördergut A, B, C, ... von hinten, von vorne und/oder von unten durch Schieben oder Ziehen transportiert, gestaut und/oder positioniert werden. Dafür wird unter jeder Gleitführung bzw. zwischen jeder Gleitoder Rollenführung ein separater absenkbarer Mitnehmer 3 gebraucht.

Wenn die Kannen nur geschoben werden sollen (wie bei dem Beispiel 1) dann werden auch hier keine absenkbaren Mitnehmer benötigt. Transportieren, Stauen und Positionieren erfolgt dann immer durch Schub von außen an das Fördergut.

In jedem Fall ist der Aufwand aber relativ hoch, da für jedes Gleitführungspaar (Kannenreihe) ein Mitnehmer mit Mitnehmerband und zwei Umlenkrädern erforderlich ist und Abstützungen für jede Führungsschiene erforderlich erscheinen. Allerdings können die inneren Führungen mittels je einer Abstützung paarweise zusammengefaßt werden. Zum Vergleich: Für vier Förderbahnen werden nach Beispiel 1 vier Umlenkräder und zwei Mitnehmerbänder benötigt. Demgegenüber erfordert die Lösung nach Beispiel 2A acht Umlenkräder und vier Mitnehmerbänder. Dafür besteht jedoch die vorteilhafte Möglichkeit, die einzelnen Gutreihen unabhängig voneinander antreiben (Speicher, stauen, positionieren) zu können.

### Beispiel 2B

Grundsätzlich kann bei der Alternative nach Fig. 7 anstelle der Umlaufkonstruktion ein Linearantrieb der Mitnehmer vorgesehen werden. Der Funktions- bzw. Wirkungsbereich der Mitnehmer kann dadurch auf dem eigentlichen Förderweg des Fördergut beschränkt werden. Beispielsweise kann als linearer Mitnehmerantrieb ein Zylinder ohne Kolbenstange eingesetzt werden.

### Bezugszeichenliste

- 1 =: Förderbahn
- 2 =: Boden (1)
- 3, 4 =: Mitnehmer
- 5 =: Mitnehmerband
- 6, 7 =: Rolle
- 8, 9 =: Förder-/Staurichtung
- 10-12 =: Anschlag
- 13 =: Achse (6, 7) - (Fig. 6 und 7)
- 14 =: Gleitführung
- 15 =: Querabstützung
- 16 =: Ständer
- 17 =: Schlitz
- 18 =: Boden

- 20 =: Ausrichtposition
- 21 =: Grundposition (3)
- 22 =: Förderposition (3)
- 23 =: Grundposition (4)

- A - D =: Fördergut

## Patentansprüche

1. Umlaufförderer mit mindestens einem Mitnehmer (3, 4) zum Fördern, Stauen und/oder Positionieren durch Ziehen oder Schieben von Fördergütern (A bis D), wie Spinnkannen, längs einer Förderbahn (1), nämlich einer Rollen- und/oder Gleitführung, **dadurch gekennzeichnet, daß** mindestens zwei separate nebeneinanderliegende Förderbahnen (1) vorgesehen sind auf welchen zugleich in beiden Richtungen gefördert, gestant, und positioniert werden kann, und daß ein und derselbe Mitnehmer (3, 4) für beide Richtungen der Förderbahnen (1) zum Fördern oder Stauen wahlweise für die eine oder andere Förderbahn (1) oder für mindestens zwei nebeneinanderliegende Förderbahnen (1) ausgbildet ist.

2. Umlaufförderer nach Anspruch 1, **dadurch gekennzeichnet, daß** die Förderbahnen (1) räumlich parallel zueinander liegen.

3. Umlaufförderer nach Anspruch 1 oder 2, **dadurch gekennzeichnet, daß** der Mitnehmer (3, 4) versenkbar ist.

4. Umlaufförderer nach mindestens einem der Ansprüche 1 bis 3, **dadurch gekennzeichnet, daß** der Mitnehmer (3, 4) längs der Förderbahn (1) an einer Rundführung umlaufend oder an einer Linearführung gradlinig hin und her, insbesondere kontinuierlich oder taktweise, antreibbar ist.

5. Umlaufförderer nach mindestens einem der Ansprüche 1 bis 4, **dadurch gekennzeichnet, daß** einer vorgegebenen Endposition am Stauplatz ein Anschlag (10, 11, 12) zugeordnet ist.

6. Umlaufförderer nach Anspruch 5, **dadurch gekennzeichnet, daß** der Anschlag (10, 11, 12) versenkbar oder auf andere Weise inaktivierbar ist.

7. Umlaufförderer nach mindestens einem der Ansprüche 1 bis 5, **dadurch gekennzeichnet, daß** ein Mitnehmer (3) zum definierten Einstellen einer Stauspitze steuerbar anzutreiben ist.

8. Umlaufförderer nach mindestens einem der Ansprüche 1 bis 7, **dadurch gekennzeichnet, daß** die Förderbahn (1) in Längsrichtung für einen Niveauausgleich zwischen den Höhenlagen von sich an die Enden der Rollen- oder Gleitführung anschließenden Anlage geneigt ist.

## Claims

1. Circulating conveyor with at least one carrier (3, 4) for conveying, storing and/or positioning by pulling or pushing goods to be conveyed (A to D), such as sliver cans, along a conveying track (1), namely a roller and/or sliding guide, **characterised in that** at least two separate adjacent conveyor tracks (1) on which conveying, storing and positioning can take place simultaneously in the two directions are provided, and **in that** one and the same carrier (3, 4) is designed for the two directions of the conveying track (1) for conveying or storing, optionally for the one or other conveying track (1) or for at least two adjacent conveying tracks (1).

2. Circulating conveyor according to claim 1, **characterised in that** the conveyor tracks (1) are spatially parallel to one another.

3. Circulating conveyor according to claim 1 or 2, **characterised in that** the carrier (3, 4) can be lowered.

4. Circulating conveyor according to at least one of claims 1 to 3, **characterised in that** the carrier (3, 4) can be driven along the conveying track (1) to circulate on a circular guide or in a straight line back and forth on a linear guide, in particular continuously or in a clocked manner.

5. Circulating conveyor according to at least one of claims 1 to 4, **characterised in that** a stop (10, 11, 12) is associated with a preset end position at the storage place.

6. Circulating conveyor according to claim 5, **characterised in that** the stop (10, 11, 12) can be lowered or inactivated in another manner.

7. Circulating conveyor according to at least one of claims 1 to 5, **characterised in that** a carrier (3) is to be driven in a controlled manner for the defined adjustment of a storage end point.

8. Circulating conveyor according to at least one of claims 1 to 7, **characterised in that** the conveyor track (1) is tilted in the longitudinal direction to equalise the levels between the height positions of equipment adjacent to the ends of the roller or sliding guide.

## Revendications

1. Transporteur sans fin comportant au moins un entraîneur (3, 4) pour transporter, accumuler et/ou positionner par traction ou poussée des produits à transporter (A à D), comme des pots de filature, le long d'un chemin de transport (1), à savoir d'un guidage à rouleaux et/ou d'un guidage à glissement, **caractérisé en ce qu'**il est prévu au moins deux chemins de transport (1) séparés situés côte à côte sur lesquels on peut transporter, accumuler et positionner dans les deux directions en même temps, et qu'un seul et même entraîneur (3, 4) pour les deux directions des chemins de transport (1) est conçu pour le transport ou l'accumulation au choix pour l'un ou pour l'autre chemin de transport (1) ou pour au moins deux chemins de transport (1) situés côte à côte.

2. Transporteur sans fin selon la revendication 1, **caractérisé en ce que** les chemins de transport (1) sont mutuellement parallèles dans l'espace.

3. Transporteur sans fin selon la revendication 1 ou 2, **caractérisé en ce que** l'entraîneur (3, 4) est escamotable.

4. Transporteur sans fin selon au moins l'une des revendications 1 à 3, **caractérisé en ce que** l'entraîneur (3, 4), le long du chemin de transport (1), peut être entraîné en tournant sur un guidage circulaire ou en allant et venant en ligne droite sur un guidage linéaire, en particulier de manière continue ou cadencée.

5. Transporteur sans fin selon au moins l'une des revendications 1 à 4, **caractérisé en ce qu'**une butée (10, 11, 12) est associée à une position finale prédéterminée à l'emplacement d'accumulation.

6. Transporteur sans fin selon la revendication 5, **caractérisé en ce que** la butée (10, 11, 12) peut être escamotée ou inactivée d'une autre manière.

7. Transporteur sans fin selon au moins l'une des revendications 1 à 5, **caractérisé en ce qu'**un entraîneur (3) doit être entraîné de manière commandée pour régler de manière définie une extrémité d'accumulation.

8. Transporteur sans fin selon au moins l'une des revendications 1 à 7, **caractérisé en ce que** le chemin de transport (1) est incliné dans la direction longitudinale pour compenser le décalage en hauteur d'installations raccordées aux extrémités du guidage à rouleaux ou du guidage à glissement.
